# EUROPEAN PATENT SPECIFICATION

(11) **EP 4 298 429 B1**
(45) Date of publication and mention of the grant of the patent: **20.11.2024**
(21) Application number: 21718792.1
(22) Date of filing: 24.02.2021
(51) Int. Cl.: G01N 21/65, G01N 21/84, G01N 21/77, B82Y 20/00

(54) **TEST STRIP FOR SURFACE-ENHANCED RAMAN SPECTROSCOPY, METHOD OF PREPARATION AND USE THEREOF**
TESTSTREIFEN FÜR DIE OBERFLÄCHENVERSTÄRKTE RAMAN-SPEKTROSKOPIE, VERFAHREN ZU SEINER HERSTELLUNG UND DESSEN VERWENDUNG
BANDELETTE D'ESSAI POUR SPECTROSCOPIE RAMAN EXALTÉE DE SURFACE, PROCÉDÉ DE FABRICATION ET D'UTILISATION

(43) Date of publication of application: 03.01.2024
(73) Proprietor: Univerzita Palackého v Olomouci, 779 00 Olomouc (CZ)
(72) Inventor: CHALOUPKOVA, Zuzana, 779 00 Olomouc (CZ); RANC, Vaclav, 783 14 Bohunovice (CZ)
(74) Representative: Harber IP s.r.o.
(86) International application number: PCT/CZ2021/050022
(87) International publication number: WO 2022/179647

(56) References cited:
- WO-A1-2009/126735
- CN-A- 111 751 525
- US-A1- 2019 376 962

## Description

### Technical Field

The present invention discloses a method for direct detection of low-molecular-weight substances and proteins, such as IgG, which is an important indicator of the immune system's function. Detection is based on a combination of modular polymer strips capable of separating an analyte from a biological matrix based on different physicochemical interactions of the sample components with the polymer and the part containing silver or gold nanoparticles in its structure. Due to the presence of plasmonic silver and/or gold nanoparticles, the proteins are detected by surface-enhanced Raman spectroscopy.

### Background Art

The Raman spectroscope consists of a light source (in most cases a laser) focused on an analysed sample. When irradiated, an effect occurs referred to as an inelastic scattering. The radiation generated in this way is then detected and converted by a system of electronic elements into an electrical signal, which is then presented as the dependence of the intensity of the radiation incident on the detector at its wavelength or its wavenumber. A phenomenon called Surface-Enhanced Raman Scattering (SERS) is used to reduce this technique's detection limit significantly. This phenomenon occurs due to the monitored molecule's interaction with a nanomaterial having characteristic optical properties, especially a surface plasmon of a suitable intensity and wavelength. So far, the analysis of substances by surface-enhanced Raman spectroscopy has been based on substrates containing mainly metal (silver or gold) colloids. The disadvantage of colloidal systems is the temporal and chemical instability of the particle size or morphology and the inhomogeneity caused by the concentration of residual ions, which emerge during the metal's chemical reduction from the respective salt. Inhomogeneity also has a significant effect on the reproducibility of the results obtained. Solid substrates in the form of metal layers or glass substrates coated with gold or silver nanoparticles can also be advantageously used as substrates for surface-enhanced Raman spectroscopy. However, these substrates are very fragile, and their preparation is very time and money consuming.

The prior art describes SERS substrates prepared by spraying already prepared silver nanoparticles onto a nitrocellulose membrane. Raman spectra were then obtained by measurement on the non-dried substrate. The disadvantage of spraying the membrane with a silver colloid is their inhomogeneity and instability, which has a negative effect on the reproducibility of the results and high detection limits of SERS measurements.

The nanoparticles used are nanoparticles of silver, gold, copper or cadmium, applied electrostatically to nitrocellulose strips. The sample is entrained in a side stream, and the analytes are detected by surface-enhanced Raman spectroscopy at the site of the electrostatically immobilised nanoparticles. Silver or gold nanoparticles can be functionalised, for example, with antibodies. But the nanoparticles are applied to the strip electrostatically, thus unsystematically and inhomogeneously, and in principle cannot provide a uniform analytical signal. Basically, this method of detecting a single analyte in a simple solution does not allow a multiplex analysis of multiple analytes in complex samples.

Test strips used, for example, as biosensors to detect histone methylation are also known. Signal amplification for Raman spectroscopy is achieved using colloidal gold particles and a sandwich detection model via hybridisation of DNA molecules. A layer of gold nanoparticles functionalised with DNA molecules is anchored to nitrocellulose. In the presence of the analysed substance, this layer hybridises with the counterpart, anchored to the free-flowing gold nanoparticles. This hybridisation is then evaluated as evidence of the structure of the analyte, in this case, histone methylation.

There is also a diagnostic platform based on the SERS effect of the nanostructured layer of silver nanoparticles electrostatically applied or dusted onto a substrate material. This platform is used to detect analytes using antibodies or by targeted hybridisation of oligonucleotide strands, either directly or using chemical compounds (labels) that have a strong signal in Raman microscopy. The SERS-active nanostructured layers are based on silver nanoparticles, which are immobilised on a selected substrate by described methods based on electrostatic interactions.

US20100055721 (A1) describes a diagnostic test based on a SERS-active substrate of silver nanoparticles, which are functionalised with (i) antibodies against the analysed compounds and (ii) a chemical label with a strong signal in Raman spectroscopy. The patent describes a test strip in which antibodies against the compounds to be analysed are immobilised in at least two or more sites. During the analysis, the sample, which is dosed to the sample part, and the functionalised silver nanoparticles gradually drift towards the antibody sites. If the sample contains the analysed compound, the compound interacts with the antibody immobilised on the strip's surface. It then forms a sandwich with the antibody anchored to the silver nanoparticles' surface. As a result, the signal of chemical label present on the surface of the functionalised silver nanoparticles is detected at functionalised locations on the strip's surface by Raman spectroscopy. The system of detection of a wide range of analytes using these strips with lateral flow allows the separation of the analytes and their targeted detection through a combination of a substrate based on quantum dots and a substrate active in surface-enhanced Raman spectroscopy. The SERS-active substrate is based on gold nanoparticles with a size of, for example, 40 nm, which are bound to antibodies against the targeted analytes. Thus, it is an approach where the SERS-active substrate acts as a label for the antibodies used. Its task is not to amplify the analyte signal but to detect the selector in a targeted manner. The presence of the analysed molecule in the sample is subsequently derived therefrom.

CN 111751525 A discloses a lateral flow immunoassay test strip. The disclosure is based on ordered micro-nano structure, which is applied as detection mechanism for a specific molecular target in an analysed sample. The strip consists of a substrate, sample pad, conjugate pad, chromatography pad. The ordered micro-nano structure detection pad and an absorption pad are located on the substrate from left to right, in which the sample pad serves as a target loading area. Nanoparticles are combined on the conjugate pad, the ordered micro-nano structure detection pad is located on the chromatography pad, and a detection and a quality control areas are positioned on the ordered micro-nano structure detection pad; the sample pad and the conjugate pad are overlapping, the conjugate pad and the chromatography pad overlapping, the ordered micro-nano structure detection pad is anchored on the upper surface of the chromatography pad, and the chromatography pad and the absorption pad are overlapping. When a sample reaches a detection area, multi-target detection can be achieved by a detection of various analytical signals, including Raman scattering. The applied nanoparticles can be metallic core-shell structures, carbon, magnetic or quantum dots. The anchored signal tags include Raman and fluorescent labels.

US 2019/376962 A1 describes a method applicable in a detection of molecular targets in a sample using surface enhanced Raman spectroscopy. The described method includes steps of providing a 3D-diagnostic substrate donating a capture agent for the analysed sample. The 3D structure exposes the sample to the substrate and to a Raman detection agent, and thus allows the targeted molecular marker in the sample to specifically bind to the capture agent of the diagnostic substrate and an affinity component of the Raman detection agent. Finally, the structure allows a detection of the interaction between the reporter and the molecular target by the means of Raman spectroscopy. Raman detection agents may include Raman signal-enhancing metal nanoparticles with anchored Raman reporters and affinity components for binding to the analyte or the complex formed between the analyte and the capturing agent.

WO 2009/126735 A1 discloses a backer strip supporting a length of Millipore HFI 35 nitrocellulose lateral flow membrane. Capture antibodies specific to influenza A nucleoprotein were striped across this membrane to form a test line. Respective immunoglobulin antibody was striped adjacent to the test line to form a control line. Oxonica Nanoplex^{™} SERS nanoparticles were sprayed onto a conjugate pad that had been treated with a 10% SEABLOCK solution (Pierce 37527). The nanoparticles were conjugated with a detection antibody to influenza A nucleoprotein. The conjugate pad was adhered to the backer strip at one end of the lateral flow membrane. At the opposite end of the lateral flow membrane, an absorbent wicking pad was attached. The resulting lateral flow assay strip was mounted within a two-part polystyrene cartridge. This cartridge completely enclosed the assay strip except for a central window revealing the test and control line region of the LF membrane, and a sample application well centered on the conjugate pad.

There are many scientific publications on the development and research of strips for the detection of selected chemicals using Raman spectroscopy. In all of these papers, silver or gold nanoparticles are non-covalently bound to the substrate surface. The SERS strip does not contain the possibility of pre-treatment of samples and works on the principle of dipping its part with silver/gold nanoparticles (non-covalently bound to the surface) in the analysed solution containing an analyte and subsequent detection of this analyte after drying the strip by Raman spectroscopy. Gold nanoparticles can be functionalised, for example, with a short DNA strand - aptamer. This chain selectively immobilises the target analyte, the solution of which has been applied to the strip. The analyte is then selectively detected by the specific interaction of a second cyanine 3-labelled DNA strand.

### Disclosure of the Invention

Structural analysis of organic compounds is one of the most difficult tasks in analytical chemistry. In today's rapid development of instrumental techniques, the task is becoming easier thanks to new technologies. But even so, the analysis of trace amounts of a chemical compound (analyte) often present in a complex mixture is still considered a difficult challenge. Therefore, new methods of the most sensitive direct detection are always being sought (i.e. detection of the analyte directly examined, not detecting another substance with which the analyte sought interacts).

The present disclosure relates to a system for directly detecting trace amounts of chemical compounds in complex matrices. The system uses test strips containing in their structure both a polymer capable of separating individual sample components based on their different physicochemical properties, and plasmonic noble metal nanoparticles, which mediate amplification of Raman scattering of the analyte, which is adsorbed on them during the analysis. The present disclosure relates to a test strip serving as a complex analytical tool that makes it possible to separate chemical compounds on the basis of their different physicochemical properties and, at the same time, comprises in its structure a substrate for surface-enhanced Raman spectroscopy, which subsequently serves to detect the separated compounds. In contrast to the prior art, the test strip according to the invention contains silver or gold nanoparticles covalently bound to a nitrocellulose membrane via nitrogen-containing functional groups present in the nitrocellulose structure. The covalent binding of nanoparticles in the test strip ensures their homogeneity. This results in very low detection limits at the ng/L concentration level and in the stability of the analytical signal, which is not possible by merely spraying nitrocellulose with a silver or gold colloid known in the art and leading only to electrostatic interactions between nanoparticles and nitrocellulose. Also, the covalent binding of the nanoparticles to the nitrocellulose membrane leads to their significantly stronger anchoring in the test strip; in contrast to the prior art, these particles do not elute. The detection limits and the signal's stability across the detection strip are demonstrated in the examples below. Compared to prior art solutions, the test strip described herein can detect low-molecular-weight compounds, such as adenine, from a concentration of 10⁻⁷ mol/L, and proteins, such as IgG, from a concentration of 1 ng/L, which is an order of magnitude lower limit of detection compared to existing solutions. The analytical signal's stability, represented as a relative deviation of the intensity of the analyte's spectral band across the detection strip, is less than 15 per cent in the case of the invention described herein. In the prior art, the relative deviation of the spectral band intensity is significantly higher, i.e. the analytical signal's stability is substantially lower.

The analyte is detected on the test strip of the present invention by a direct method from a signal provided by its structure (system of chemical bonds in the analyte) based on its interaction with the surface of silver and/or gold nanoparticles. The selectivity of detection is ensured by a different interaction of the analytes present in the analysed mixture with the nitrocellulose, which occurs due to their different structure and thus the physicochemical properties of the analytes. Therefore, the invention described herein does not utilise the sandwich model known in the art but allows the analyte (mixture) to be applied directly to the test strip's sample part, with mobility of the analyte provided by capillary force without further modification of the test strip.

The present invention uses silver and/or gold nanoparticles which, unlike all currently known solutions, are covalently immobilised on the nitrocellulose membrane, and allows their further functionalisation by appropriate antibodies which can be bound to the particle surface by, for example, direct electrostatic interaction with surfaces of silver and/or gold nanoparticles. The strip thus prepared can then be used to detect the appropriate antigen, such as IgG, selectively.

The object of the present invention is a test strip for surface-enhanced Raman spectroscopy, which comprises a substrate for preventing the sample from flowing through the porous nitrocellulose membrane, to which the nitrocellulose membrane with a pore size in the range of from 0.20 to 0.45 µm, preferably with a pore size of 0.30 µm, is attached. Silver and/or gold nanoparticles are covalently bound to this nitrocellulose membrane. Nanoparticles are understood to be particles whose size is in the range of 1 to 1,000 nm. The test strip comprises a sample part for application of the sample, comprising the nitrocellulose membrane having a pore size in the range of from 0.20 to 0.45 µm, most preferably 0.30 µm, preferably provided with an adhesion treatment consisting of a non-wetting surface (commercial product, high hold-up volumes > 50 µL/cm²), and an absorption part for absorbing the sample passing through the test strip. In the absorption part, the nitrocellulose membrane has a pore size in the range of from 0.45 to 0.50 µm for an easy absorption of the sample. The sample and absorption parts are located at opposite ends of the test strip in contact with the nitrocellulose membrane. They are adapted to freely transfer liquid from its application onto the sample part through the nitrocellulose membrane, silver and/or gold nanoparticles, and the nitrocellulose membrane until being absorbed in the absorption part of the test strip.

The test strip for SERS is defined in independent claim 1. It is based on the unique covalent binding of silver and/or gold nanoparticles to the nitrocellulose substrate, which is then incorporated into the strip's structure and enables to detect the analyte directly from the analytical signal provided by its structure. Therefore, it is unnecessary to develop a dual system of antibodies, one of which is labelled with a chemical label active in the resonance Raman spectroscopy. The test strip also contains a sample and absorption part (such as commercial product Whatman, sterile membrane filters with an absorbent pad, cellulose nitrate, 0.45 µm pore size, 47 mm Dia., Sigma Aldrich, USA). They are located at opposite ends of the strip and adapted to freely transfer the liquid applied to the sample part through the nitrocellulose membrane containing silver nanoparticles covalently anchored to the membrane until the absorption part absorbs it at the end of the strip.

In one aspect of the invention, the test strip, whose part containing silver and/or gold nanoparticles, is obtainable by first preparing silver or gold nanoparticle seeds, which are then bound to the nitrocellulose membrane with a pore size in the range of from 0.20 to 0.45 µm by reaction with a reducing agent without access to light, preferably at room temperature, wherein the reducing agent for silver nanoparticles is NaBH₄, and the reducing agent for gold nanoparticles is sodium citrate.

Preferably, the reduction without access to light takes place for at least 24 hours, more preferably for at least 7 days.

This test strip comprises a substrate for preventing the sample from flowing through the porous nitrocellulose membrane, to which the nitrocellulose membrane with a pore size in the range of from 0.20 to 0.45 µm, preferably with a pore size of 0.30 µm, is attached. Silver and/or gold nanoparticles are anchored to this nitrocellulose membrane. The test strip comprises a sample part for application of the sample, comprising the nitrocellulose membrane having a pore size in the range of from 0.20 to 0.45 µm, most preferably 0.30 µm, which is preferably provided with an adhesion treatment consisting of a non-wetting surface (such as commercial product, high hold-up volumes > 50 µL/cm²), and an absorption part for absorbing the sample after passing through the test strip. In the absorption part, the nitrocellulose membrane has a pore size in the range of from 0.45 to 0.50 µm for easy absorption of the sample. The sample and absorption parts are located at opposite ends of the test strip in contact with the nitrocellulose membrane, and they are adapted to freely transfer liquid from its application to the sample part through the nitrocellulose membrane, silver and/or gold nanoparticles, and the nitrocellulose membrane until being absorbed in the absorption part of the test strip.

In one preferred embodiment, the sample part (A) is further provided with a non-wetting surface with a contact angle of at least 30 ° and a hold-up volume of more than 50 µL/cm², which serves to prevent the sample from being absorbed before passing through the entire strip. Thus, after dripping the sample into sample part A, the sample passes through the entire strip towards the absorption part, where the excess sample is absorbed if it has not been completely absorbed during the passage through the strip.

In one embodiment, the substrate is a sheet of plastic or glass, preferably with a thickness in the range of from 0.3 to 5 mm, more preferably the substrate is from plastics, even more preferably from polyvinyl chloride (PVC), polypropylene (PP) and/or polyethylene (PE). The nitrocellulose membrane is attached to the substrate, and is used to transport the sample and separate its components. Preferably, the nitrocellulose membrane is attached to the substrate with a glue or double-sided adhesive tape.

The sample and absorption parts are anchored to the nitrocellulose membrane so that there is a free transfer of liquid samples between the individual layers (the sample and absorption parts are in contact with the nitrocellulose membrane containing nanoparticles of silver and/or gold). Thanks to its adhesion treatment consisting of a non-wetting surface (commercial product, high hold-up volumes > 50 µL/cm²), which prevents the sample from being absorbed before passing through the strip, the sample part allows easy handling when applying the target substance to the test strip. Larger pores (45 to 50 µm) of the test strip's absorption part enable the absorption of the entire sample, which was transported through the strip during the analysis. The silver and/or gold nanoparticles are covalently bound to the nitrocellulose membrane, which is then inserted into a pre-prepared hole in the strip to ensure free passage of the liquid sample from the sample to the absorption part. Silver or gold nanoparticles are used to directly absorb test substances on their surface or eventually to bind proteins to antibodies immobilised on the surface of these nanoparticles. Thus, their presence has dual functionality: (1) adsorption of analyte molecules to the surface of nanoparticles depending on their affinity and (2) amplification of the measured analytical signal of the adsorbed molecules due to optoelectronic properties.

In a preferred embodiment, the silver and/or gold nanoparticles have a size in the range of from 5 to 200 nm.

In one preferred embodiment, the surface of the silver and/or gold nanoparticles can be further functionalised with antibodies by direct absorption of the antibodies onto the surface of the nanoparticles - i.e. by electrostatic interaction between the antibody and the surface of the silver or gold nanoparticle. Preferably, the antibody is selected from the group comprising anti-IgG, anti-IgA, anti-IgM.

The preparation of such functionalised silver or gold nanoparticles covalently anchored to the nitrocellulose membrane is as follows: Silver or gold nanoparticles, prepared according to known procedures, are immobilised onto the nitrocellulose membrane in a solution of an antibody (e.g. anti-IgG), thereby the antibody is directly adsorbed to the nitrocellulose membrane and as well to the nanoparticles present. The nitrocellulose membrane with a pore size in the range of from 0.20 to 0.45 µm is immersed at room temperature, preferably for at least 45 minutes, in a buffered solution with a pH in the range of from 6 to 8 (e.g. phosphate buffer, pH = 7) of the appropriate antibody, preferably at a concentration of 1 ng/L; thus, the antibody is adsorbed to the surface of the nitrocellulose membrane. The prepared silver or gold nanoparticles are also mixed with the antibody solution; thus, the antibody is adsorbed to the surface of the silver or gold nanoparticles. After drying, the nitrocellulose membrane contains the bound antibody. The nitrocellulose membrane thus treated is then placed into a suspension of silver or gold nanoparticles with adsorbed antibody (obtained by incubating the nanoparticles with the antibody solution) and a reducing agent (preferably NaBH₄ or citric acid salt). The reduction is preferably carried out for five days under light-free conditions and at room temperature.

In a preferred embodiment, the antibody is an anti-IgG monoclonal antibody; this arrangement is suitable for detecting antigens compatible with the absorbed monoclonal antibody.

Another object of the present invention is a method for preparing the test strip for surface-enhanced Raman spectroscopy, in which the sample part, a nitrocellulose membrane containing silver and/or gold nanoparticles covalently bound to the nitrocellulose membrane, and the absorption part are attached to a plastic substrate, preferably by a double-sided adhesive tape or glue. The parts are attached to the substrate so as to fit closely and allow free movement of the liquid from its application to the sample part through the nitrocellulose membrane, the part containing silver and/or gold nanoparticles, the nitrocellulose membrane to the sample absorption in the absorption part. The method is defined in independent claim 7.

The silver nanoparticles are reduced and simultaneously immobilised onto the nitrocellulose membrane in the presence of a reducing agent and without access to light before the nitrocellulose membrane is attached to the plastic substrate. First, silver nanoparticle seeds are prepared, which are then bound to the nitrocellulose membrane by reducing silver nitrate with NaBH₄ without access to light and at room temperature. In the case of gold nanoparticles, immobilisation on the nitrocellulose membrane takes place before its attachment to the plastic substrate in the presence of sodium citrate (HOC(COONa)(CH₂COONa)₂·2H₂O) without access to light. The nitrocellulose membrane thus prepared is attached to the plastic substrate in a pre-prepared location, preferably by double-sided adhesive tape.

Another object of the present invention is a method for the direct detection of an analyte by surface-enhanced Raman spectroscopy, which comprises the following steps:
(i) providing the test strip according to the present invention;
(ii) providing a sample of the analyte to be detected;
(iii) applying the analyte sample to the sample part of the test strip and then passing the sample through the test strip from the sample part through covalently bound silver and/or gold nanoparticles to the absorption part;
(iv) measuring the surface-enhanced Raman spectrum of the analyte immobilised on covalently bound silver and/or gold nanoparticles in the part of the test strip.

The method is defined in independent claim 11.

The present invention further relates to the use of the test strip according to independent claim 12 for the separation and detection of substances by surface-enhanced Raman spectroscopy (SERS).

### Brief Description of the Drawings

Fig. 1 shows a schematic drawing of the test strip comprising silver and/or gold nanoparticles serving as a substrate for surface-enhanced Raman spectroscopy, wherein A is a smooth sample part for the sample application; B is a substrate (e.g. a sheet of plastic); C is a nitrocellulose membrane attached to the plastic substrate; D is a nitrocellulose membrane to which silver and/or gold nanoparticles are covalently bound to the nitrocellulose membrane; and E is a porous absorption part for trapping the sample passed through the nitrocellulose membrane.
Fig. 2 depicts an electron microscope image wherein silver nanoparticles (bright spherical objects) can be seen covalently immobilised on the nitrocellulose membrane C (dark background) according to Example 2.
Fig. 3 shows the Raman spectrum of pure nitrocellulose membrane D containing covalently bound silver nanoparticles (black spectrum) and the Raman spectrum of Adenine obtained using the test strip described above (grey spectrum). The concentration of Adenine was 10⁻⁷ mol/L.
Fig. 4 shows the Raman spectrum of pure nitrocellulose membrane D containing electrostatically bound silver nanoparticles (black spectrum) and the Raman spectrum of Adenine obtained using the test strip described above (grey spectrum). The concentration of Adenine was 10⁻⁷ mol/L.
Fig. 5 shows the Raman spectrum of pure nitrocellulose membrane D containing covalently bound gold nanoparticles (black spectrum) and the Raman spectrum of Adenine obtained using the test strip described above (grey spectrum). The concentration of Adenine was 10⁻⁷ mol/L.
Fig. 6 shows the Raman spectrum of pure nitrocellulose membrane D containing electrostatically bound gold nanoparticles (black spectrum) and the Raman spectrum of Adenine obtained using the test strip described above (grey spectrum). The concentration of Adenine was 10⁻⁷ mol/L.
Fig. 7 shows the Raman spectrum of the test strip described herein containing covalently bound silver nanoparticles (black spectrum) immobilised on the nitrocellulose membrane D with immobilised anti-IgG antibody by direct absorption method (dark grey spectrum) and the Raman spectrum of IgG obtained on the above-mentioned test strip (grey spectrum), according to Example 9. The IgG concentration was 1 ng/L.
Fig. 8 shows the Raman spectrum of the test strip described herein containing electrostatically bound silver nanoparticles (black spectrum) immobilised on the nitrocellulose membrane D with immobilised anti-IgG antibody by direct absorption method (dark grey spectrum) and the Raman spectrum of IgG obtained on the above-mentioned test strip (grey spectrum). The IgG concentration was 1 ng/L.
Fig. 9 shows the Raman spectrum of the test strip described herein containing silver nanoparticles immobilised on the nitrocellulose membrane D with immobilised anti-IgG antibody by direct absorption method and the Raman spectrum of IgG, which was present in the mixture (IgG, BSA and PSA) obtained on the above-mentioned test strip, according to Example 10. The concentration of IgG, PSA and BSA was 1 ng/L.

### Examples

### Example 1: Preparation of the test strip for surface-enhanced Raman spectroscopy

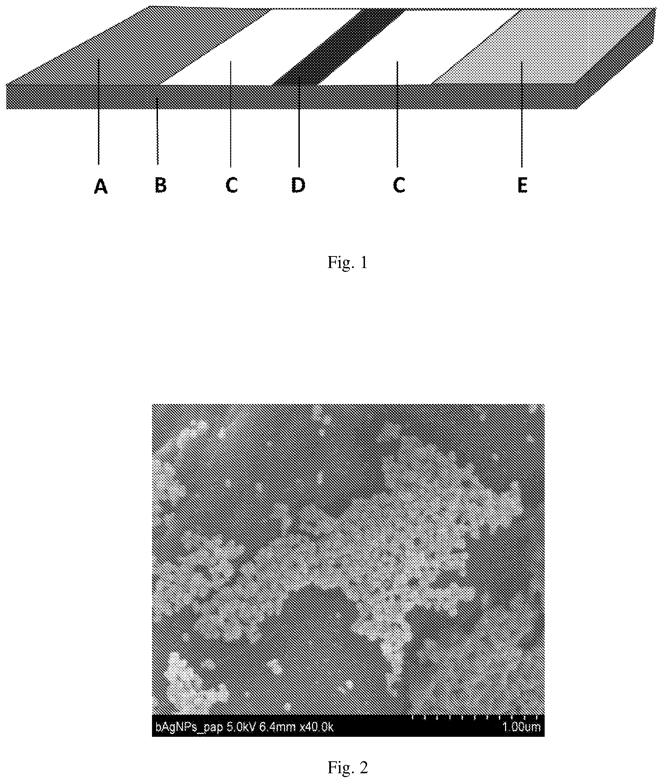

The test strip for surface-enhanced Raman spectroscopy according to the present invention, comprising silver nanoparticles bound to the nitrocellulose membrane, is shown in Fig. 1.

The strip consists of the nitrocellulose membrane C, at one end of which is the sample part A and at the other end, the absorption part E. There is part D inserted in the middle of the test strip, which contains silver and/or gold nanoparticles covalently bound to the nitrocellulose membrane C serving as a substrate for the capture and subsequent detection of substances by surface-enhanced Raman spectroscopy. Parts A, C, D, C and E of the test strip are glued in this order to the plastic substrate B made of polyvinyl chloride, which allows the application of the analysed sample without losses, which may be caused by the leakage of the sample through the nitrocellulose membrane C.

Covalent binding of silver and/or gold nanoparticles is carried out according to the following Examples 2 and 4. The electron image of the resulting silver nanoparticle-functionalised nitrocellulose membrane (Ag nanoparticles covalently bound to the nitrocellulose membrane) is shown in Fig. 2.

To prepare the test strip, the nitrocellulose membrane C with a pore size of 30 µm was used - standard filter paper, Ref. 0600F00033, Fisher Scientific, Czech Republic. As the sample part A, the commercially purchased membrane Whatman, membrane filters, cellulose nitrate, white grid, 100 units, 0.30 µm pore size, Sigma Aldrich, USA, was used. As the absorption part E, the commercial product Whatman, sterile membrane filters with the absorbent pad, cellulose nitrate, 0.45 µm pore size, 47 mm Dia., Sigma Aldrich, USA, was used.

The prepared test strip had dimensions of 70 mm × 20 mm × 0.5 mm; however, these dimensions are not limiting, and test strips of different dimensions can be used for different types of separations.

When using the test strip, a liquid sample of the mixture of substances containing the detected substance is applied to its sample part A. The liquid sample gradually rises spontaneously through the nitrocellulose membrane C, part D containing silver and/or gold nanoparticles and another nitrocellulose membrane C up to the absorption part E. The detected substance is separated from the mixture by being adsorbed to the silver and/or gold nanoparticles D, which then amplify the Raman signal in detecting the test substance by SERS.

### Example 2: Method for the preparation of silver nanoparticles covalently bound to the nitrocellulose membrane and serving as a substrate for surface-enhanced Raman spectroscopy

Silver nanoparticles were prepared according to the described protocol (S. Agnihotri, S. Mukherji, S. Mukherji, Royal Society of Chemistry, 2014, 3974-3983) using NaBH₄ as the primary reducing agent and sodium citrate (trisodium citrate, TSC) as the secondary reducing agent and stabiliser at the same time. A freshly prepared 45 mL aqueous solution containing 50 mmol/L of NaBH₄ and 2 mmol/L of TSC was stirred for 30 minutes at 60 °C in the dark. Then, a solution of silver nitrate having a volume of 5 mL and concentration of 1.22 mmol/L was added dropwise to the solution, the temperature was subsequently raised to 90 ° C, and the pH of the reaction mixture was adjusted to 10.5 with 0.1 M NaOH. The reaction took place for 20 minutes until a visible colour change occurred in the reaction mixture. The mixture was then allowed to cool down to room temperature and the silver nanoparticles were separated by centrifugation (12,000 rpm, 15 minutes) and washed three times with water.

Their immobilisation onto the nitrocellulose membrane C was performed by placing the nitrocellulose membrane (substrate) with a size of 1x1 cm and a pore size of 0.30 µm, into a 10 mL test tube. To the thus prepared tube, 0.02 g of TSC dissolved in water with a final concentration of 35 mmol/L and silver nanoparticles prepared according to the above protocol in a colloidal suspension with a silver nanoparticle concentration of 9.01 × 10¹¹ per mL in a final volume of 3 mL were further added. The mixture thus prepared was subjected to reduction for seven days under light-free conditions and at room temperature. After seven days, the substrate was removed from the tube, rinsed several times with distilled water and allowed to dry. The treated nitrocellulose membrane thus obtained contained covalently bound silver nanoparticles (Fig. 2). After the substrate was completely dry, it was then cut to the size required for application to the test strip described in Example 1 as part D thereof. The part D was applied to the plastic substrate by creating a suitable space by cutting out part of the nitrocellulose membrane C and attaching part D of the nitrocellulose membrane containing silver nanoparticles covalently anchored to the nitrocellulose membrane attached to the substrate by glue.

### Example 3 (comparative, it is not the object of the invention): Preparation of nitrocellulose membrane with electrostatically bound silver nanoparticles

Silver nanoparticles were prepared according to the described protocol (S. Agnihotri, S. Mukherji, S. Mukherji, Royal Society of Chemistry, 2014, 3974-3983) and the procedure described in Example 2. Their immobilisation on the nitrocellulose membrane C is based on electrostatic binding of silver nanoparticles by dropping these particles with a volume of 50 µL (in colloidal suspension with silver nanoparticle in concentration of 9.01 × 10¹¹ per ml) onto a 1x1 cm nitrocellulose membrane (substrate) with a pore size of 30 µm. To increase the amount of immobilised particles, this step of dropping 50 µL of colloidal suspension was repeated 5 times, each time after previous drying. After the substrate was completely dry, it was subsequently cut to the size required for application to the test strip described in Example 1 (as part D thereof). The application was carried out by creating a suitable space by cutting out a part of the nitrocellulose membrane C. The nitrocellulose membrane containing silver nanoparticles electrostatically anchored to the membrane was attached to the plastic substrate by a glue.

### Example 4: Method for the preparation of gold nanoparticles covalently bound to the nitrocellulose membrane and serving as a substrate for surface-enhanced Raman spectroscopy

Gold nanoparticles were prepared according to the protocol described in the following papers (J. Turkevitch, P. C. Stevenson, J. Hillier, Discuss. Faraday Soc., 1951, 3317 and G. Frens, Nat. Phys. Sci., 1973, 241) and their immobilisation on the nitrocellulose membrane C is based on reduction with trisodium citrate. A freshly prepared aqueous solution (gold nitrate with a volume of 25 mL and a concentration of 1.2 mmol/L) was brought to a boil for 10 minutes at 96 °C with constant stirring at 900 rpm. Then 750 µL of 1% (w/w) TSC solution was gradually added to the solution and the reaction was carried out for 15 minutes until a visible colour change of the reaction mixture. The mixture was then allowed to cool to room temperature. The strip is then prepared by inserting a 1x1 cm of nitrocellulose membrane with a pore size of 45 µm into a 10 mL test tube. To the tube thus prepared, 0.0116 g of trisodium citrate in water with a total concentration of 30 mmol/L and a colloidal suspension of gold nanoparticles with a volume of 3 mL prepared according to the procedure described above were further added. The substrate thus prepared was subjected to further reduction with trisodium citrate for seven days in the absence of light and at room temperature. After seven days, the substrate was removed from the tube, rinsed several times with distilled water and allowed to dry. The nitrocellulose membrane thus obtained contained covalently bound gold nanoparticles. After the substrate was completely dry, it was then cut to the size required for application to the test strip described in Example 1. It was applied by creating a suitable space by cutting out part of the nitrocellulose membrane C. Part D of the nitrocellulose membrane containing nanoparticles covalently bound to the membrane was attached to the plastic substrate by a glue.

### Example 5 (comparative, it is not the object of the invention): Preparation of nitrocellulose membrane with electrostatically bound gold nanoparticles

Gold nanoparticles were prepared according to the described protocol (J. Turkevitch, P. C. Stevenson, J. Hillier, Discuss. Faraday Soc., 1951, 3317 and G. Frens, Nat. Phys. Sci., 1973, 241) and the procedure described in Example 4. Their immobilisation on the nitrocellulose membrane C is based on electrostatic binding of gold nanoparticles by dropping a colloidal suspension of these particles with a volume of 50 µL onto a 1x1 cm nitrocellulose membrane (substrate) with a pore size of 45 µm. To increase the particle concentration, this 50 µl dropping step was repeated 5 times, each time after previous drying. After the substrate was completely dry, it was then cut to the size required for application to the test strip described above. It was applied in the same way as in Example 4, i.e. by creating a suitable space by cutting out a part of the nitrocellulose membrane C. The nitrocellulose membrane containing electrostatically bound gold nanoparticles was attached to the plastic substrate using a glue.

### Example 6: Method for preparation of silver nanoparticles with immobilised anti-IgG antibody by direct adsorption, serving as a substrate for IgG detection

Silver nanoparticles were prepared according to the described protocol (S. Agnihotri, S. Mukherji, S. Mukherji, Royal Society of Chemistry, 2014, 3974-3983), see Example 2, and their covalent immobilisation on the nitrocellulose membrane is based on reduction with NaBH₄. The anti-IgG antibody was immobilised by direct adsorption on the nitrocellulose membrane as follows:
The nitrocellulose membrane with a size of 1x1 cm and a pore size of 40 µm was immersed in a 500 µL of aqueous solution of anti-IgG antibody with a concentration of c = 1 ng/L.

A total of 3 mL of silver nanoparticles, prepared according to the procedure of Example 2 (in a colloidal suspension with a silver nanoparticle concentration of 9.01 × 10¹¹ per mL), were added to the reaction mixture of anti-IgG and nitrocellulose membrane, and this reaction mixture was left on a shaker for 45 minutes.

After drying, the 1x1 cm nitrocellulose membrane contained bound anti-IgG antibody. Subsequently, this membrane with bound anti-IgG antibody was placed in a 10 mL tube. To each thus prepared tube, 0.02 g of NaBH₄ with a total concentration of 30 mM and the above-mentioned nanoparticles with anti-IgG antibody in a resulting volume of 3 mL were further added. The substrate thus prepared underwent reduction for five days in the absence of light and at room temperature. After five days, the substrate was removed from the tubes, rinsed several times with distilled water and allowed to dry. The result was the nitrocellulose membrane, to which silver nanoparticles, containing immobilised anti-IgG antibody on their surface, were covalently bound. At the same time, also the anti-IgG antibody was immobilised on the nitrocellulose membrane itself. After the substrate was completely dry, it was subsequently cut to the size required for application to the test strip described in Example 1 as part D thereof.

### Example 7 (comparative, it is not the subject of the invention): Preparation of nitrocellulose membrane with electrostatically bound silver nanoparticles and immobilised anti-IgG antibody

Silver nanoparticles were prepared according to the described protocol (S. Agnihotri, S. Mukherji, S. Mukherji, Royal Society of Chemistry, 2014, 3974-3983), see Example 2. Their immobilisation on the nitrocellulose membrane C is based on the electrostatic binding of silver nanoparticles according to Example 3. The pore size of the nitrocellulose membrane used was 40 µm. Immobilisation of the anti-IgG antibody was carried out by direct adsorption on the nitrocellulose membrane. A 1x1 cm membrane with electrostatically bound silver nanoparticles was immersed at room temperature for 45 minutes in a 500 µL aqueous solution of the appropriate antibody (anti-IgG, c = 1 ng/L). The result was the nitrocellulose membrane, to which silver nanoparticles and immobilised anti-IgG antibody were electrostatically bound. After the substrate was completely dry, it was subsequently cut to the size required for application to the test strip described in Example 1.

### Example 8: Measurement by surface-enhanced Raman spectroscopy - Adenine

The test strip containing silver or gold nanoparticles (see below) bound to the nitrocellulose membrane, prepared according to the procedure of Examples 1, 2 and 4, was used for measurements by the surface-enhanced Raman spectroscopy. For comparison, Adenine was also measured using the test strip according to comparative Examples 3 and 5. The test strip was tested for the detection of Adenine at a concentration of 10⁻⁷ mol/L.

On the test strip prepared according to Example 1 (wherein the sample part is a commercial product, high hold-up volumes > 50 µL/cm²) a 50 µL of Adenine solution with a concentration of 10⁻⁷ M was applied. The measurements on Raman microscope took place after the solution passed through the entire test strip spontaneously and dried. The He-Ne laser with an excitation wavelength of 633 nm and a laser power per sample of 3 mW was used for excitation.

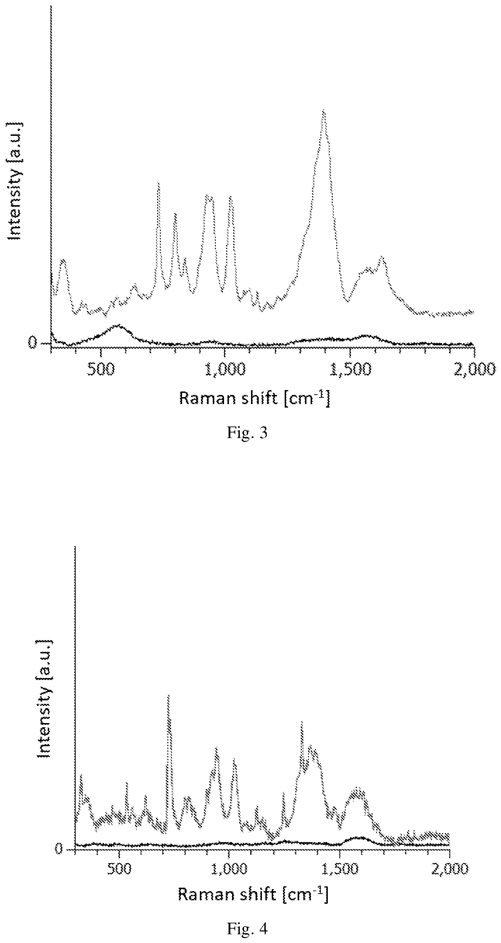

Fig. 3 shows the Raman spectra of Adenine at a concentration of 10⁻⁷ M immobilised on covalently bound silver nanoparticles prepared according to Example 2, in comparison with the blank experiment, which represents the signal from the substrate - silver nanoparticles bound to the nitrocellulose membrane (black spectrum), to show possible undesirable interactions coming from the substrate.

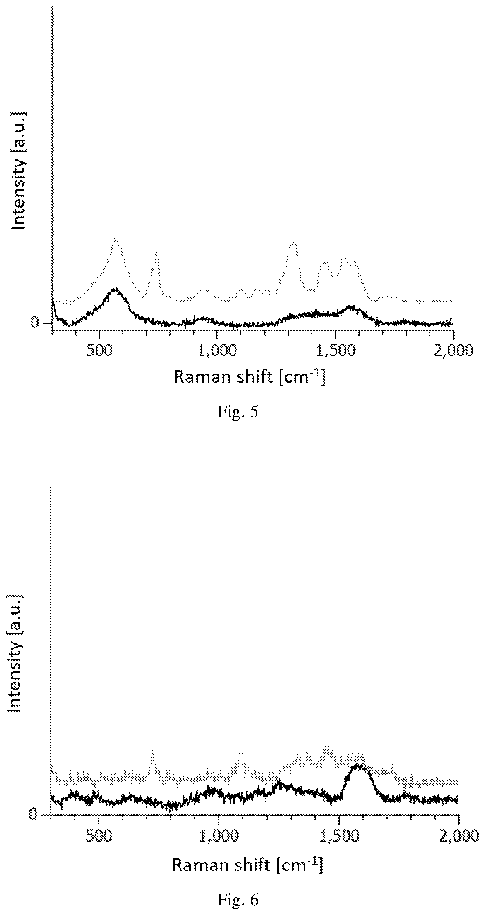

Fig. 5 shows the Raman spectra of Adenine at a concentration of 10⁻⁷ M immobilised on covalently bound gold nanoparticles prepared according to Example 4, in comparison with the blank experiment, which represents the signal from the substrate - gold nanoparticles bound to the nitrocellulose membrane (black spectrum), to show possible undesirable interactions coming from the substrate.

For comparison, the test strip containing silver or gold nanoparticles bound electrostatically on the nitrocellulose membrane, prepared according to Examples 1, 3 and 5, was used for measurements by surface-enhanced Raman spectroscopy. The test strip was, as above, tested for the detection of Adenine at a concentration of 10⁻⁷ mol/L. On the test strip prepared according to Example 1 (where the sample part is a commercial product, high hold-up volumes > 50 µL/cm²) a 50 µL of Adenine solution with a concentration of 10⁻⁷ M was applied. The measurements on Raman microscope took place after the solution passed through the entire test strip spontaneously and dried. The He-Ne laser with an excitation wavelength of 633 nm and a laser power per sample of 3 mW was used for excitation.

Fig. 4 shows the Raman spectra of Adenine at a concentration of 10⁻⁷ M immobilised on electrostatically bound silver nanoparticles in comparison with the blank experiment, which represents the signal from the substrate - silver nanoparticles bound to the nitrocellulose membrane (black spectrum), to show possible undesirable interactions coming from the substrate.

Fig. 6 shows the Raman spectra of Adenine at a concentration of 10⁻⁷ M immobilised on electrostatically bound gold nanoparticles in comparison with the blank experiment, which represents the signal from the substrate - gold nanoparticles bound to the nitrocellulose membrane (black spectrum), to show possible undesirable interactions coming from the substrate.

From the comparison of the spectra in Figs. 3, 4, 5 and 6, it is apparent that covalently bound silver or gold nanoparticles provide significantly more sensitive SERS detection.

### Example 9: Measurements by surface-enhanced Raman spectroscopy - IgG

Next, the strip of the present invention was tested for the determination of IgG protein at a concentration of 1 ng/mL using functionalised silver nanoparticles by the methods described in Example 6, i.e. by direct adsorption of the antibody to the surface of silver nanoparticles.

On the test strip (the sample part A thereof) containing part D with covalently bound silver nanoparticles and the immobilised anti-IgG antibody of Example 6, a 50 µL of IgG solution with a concentration of 1 ng/mL was applied. The measurements on Raman microscope took place after the solution passed through the entire test strip and dried. The He-Ne laser with an excitation wavelength of 633 nm and a laser power per sample of 3 mW was used for excitation.

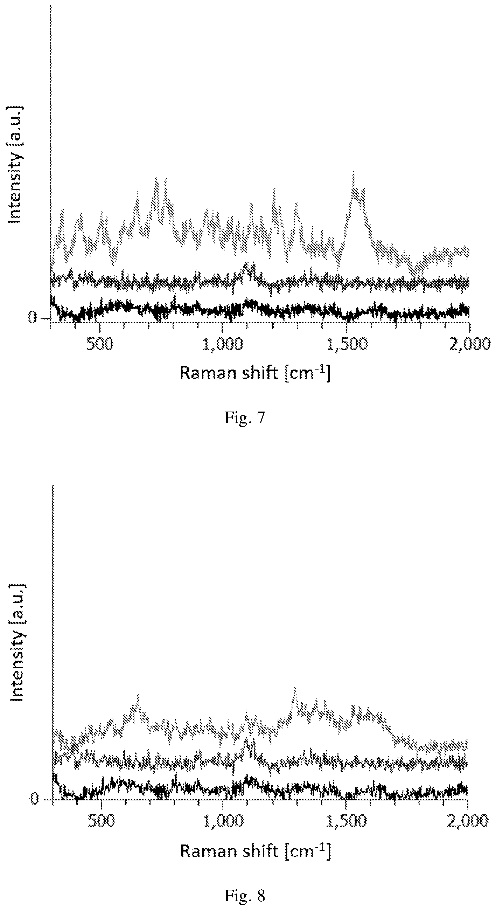

Fig. 7 shows the Raman spectrum of protein (IgG, 1 ng/L) bound to silver nanoparticles (covalently bound) by immobilised antibody (anti-IgG, 1 ng/L) by direct adsorption, then the Raman spectrum of immobilised antibody (anti-IgG, 1 ng/L) on silver nanoparticles by direct adsorption, and the Raman spectrum of the blank, which is the signal coming from the substrate - silver nanoparticles bound to the nitrocellulose membrane, to display possible undesirable interactions coming from the substrate.

For comparison, the test strip for determining IgG protein at a concentration of 1 ng/mL using functionalised silver nanoparticles by the methods described in comparative Example 7, i.e. by direct adsorption of the antibody to the surface of the silver nanoparticles. On the test strip (the sample part A thereof) a 50 µL of IgG solution with a concentration of 1 ng/mL was applied. The measurements on Raman microscope took place after the solution passed through the entire test strip and dried. The He-Ne laser with an excitation wavelength of 633 nm and a laser power per sample of 3 mW was used for excitation.

Fig. 8 shows the Raman spectrum of protein (IgG, 1 ng/L) bound to silver nanoparticles (electrostatically bound) by immobilised antibody (anti-IgG, 1 ng/L) by direct adsorption, then the Raman spectrum of immobilised antibody (anti-IgG, 1 ng/L) on silver nanoparticles by direct adsorption, and the Raman spectrum of the blank, which is the signal coming from the substrate - silver nanoparticles bound to the nitrocellulose membrane electrostatically, to display possible undesirable interactions coming from the substrate.

From the comparison of the spectra in Figs. 7 and 8, it is apparent that covalently bound silver nanoparticles provide significantly more sensitive SERS detection.

### Example 10: Measurements by surface-enhanced Raman spectroscopy - mixture containing IgG, PSA and BSA

Next, the strip according to Examples 1 and 6 was tested for the determination of IgG protein at a concentration of 1 ng/L, which was present in a mixture containing IgG, PSA (prostate specific antigen) and BSA (bovine serum albumin), using functionalised silver nanoparticles prepared according to Example 6, i.e. by direct adsorption of the antibody to the surface of the silver nanoparticles.

On the test strip (the sample part A thereof) containing part D with covalently bound silver nanoparticles and the immobilised anti-IgG antibody of Example 6, a 50 µL of IgG, PSA and BSA mixture with a total protein concentration of 1 ng/mL was applied. The mutual concentration ratio of IgG: PSA: BSA in the mixture was 1: 1: 1. The measurements on Raman microscope took place after the solution passed through the entire test strip and dried. The He-Ne laser with an excitation wavelength of 633 nm and a laser power per sample of 3 mW was used for excitation.

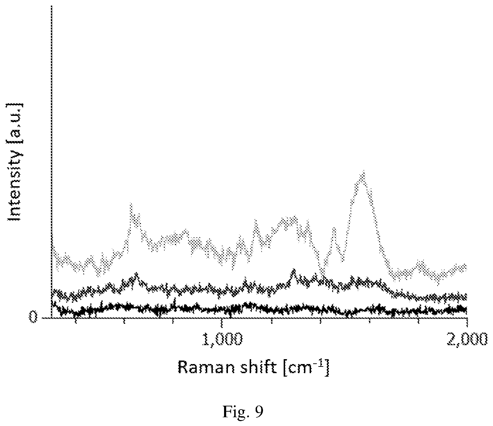

Fig. 9 shows the Raman spectrum of the mixture of proteins (IgG, PSA and BSA, total protein concentration is 1 ng/L) bound to the silver nanoparticles from the mixture by immobilised antibody (anti-IgG, 1 ng/L) by direct adsorption, then the Raman spectrum of immobilised antibody (anti -IgG, 1 ng/L) on the silver nanoparticles by direct adsorption and the Raman spectrum of the blank, which is the signal coming from the substrate - silver nanoparticles bound to the nitrocellulose membrane, to display possible undesirable interactions coming from the substrate.

In conclusion, the above-described examples are directed to the preparation of easy-to-use detection strips, wherein the actual detection of the analytical signal takes place by surface-enhanced Raman spectroscopy. The strips can be based on gold or silver nanoparticles having a plasmon on their surface, the wavelength of which is advantageously useful for detection by Raman spectroscopy operating in the visible region - demonstrated here using a laser with a wavelength of 633 nm (red). The function of the strips is shown here in the examples of Adenine and IgG analysis, where IgG was analysed based on a selective interaction with anti-IgG anchored to the prepared strip. The analysis was performed both alone and in a mixture with other proteins (BSA, PSA) and its sensitivity is significantly increased due to the covalent binding of silver or gold nanoparticles, compared to known SERS strips based on electrostatic interaction of nanoparticles with the strip's surface.

## Claims

1. A test strip for surface-enhanced Raman spectroscopy, comprising a substrate (B), to which a nitrocellulose membrane (C) is attached, wherein at one end of the nitrocellulose membrane (C) a sample part (A) is attached for application of the sample to be analysed, and at the opposite end of the nitrocellulose membrane (C) an absorption part (E) is attached for absorbing the sample passed through the test strip, the test strip further comprising a part (D) containing silver and/or gold nanoparticles, wherein the sample part (A) and the absorption part (E) are located at opposite ends of the test strip, and are adapted to freely transfer liquid from its application onto the sample part (A) through the nitrocellulose membrane (C), part (D) containing silver and/or gold nanoparticles, and the nitrocellulose membrane (C) until absorption of the sample in the absorption part (E),
**characterized in that** the nitrocellulose membrane (C), the sample part (A) and the part (D) containing silver and/or gold nanoparticles have pore size in the range of from 0.20 to 0.45 µm, preferably 0.30 µm, and the absorption part (E) has a pore size in the range of from 0.45 to 0.50 µm;
and **in that** the silver and/or gold nanoparticles are covalently bound to the nitrocellulose membrane (C) via nitrogen-containing functional groups present in the nitrocellulose membrane, and the part (D) is inserted in the middle of the test strip.

2. The test strip according to claim 1, **wherein** the sample part (A) is further provided with a non-wetting surface with contact angle of at least 30 °, and with a hold-up volume > 50 µL/cm².

3. The test strip according to claim 1 or 2, **wherein** the substrate (B) is a sheet of plastic or glass, preferably with a thickness in the range of from 0.3 to 5 mm, more preferably the substrate (B) is made of plastics, even more preferably the plastics is selected from the group comprising polyvinyl chloride, polypropylene and polyethylene.

4. The test strip according to any one of the preceding claims, **wherein** the nitrocellulose membrane (C), and the sample part (A), the absorption part (E), and the part (D) containing silver and/or gold nanaoparticles are attached to the substrate (B) with a double-sided adhesive tape or a glue.

5. The test strip according to any one of the preceding claims, **wherein** the surface of the silver and/or gold nanoparticles is functionalized with an antibody, preferably with anti-IgG, anti-IgA or anti-IgM antibody.

6. The test strip according to claim 5, **wherein** the antibody is bound to the surface of silver and/or gold nanoparticles by an electrostatic interaction.

7. A method for preparing the test strip according to any one of the preceding claims, wherein
the sample part (A), the nitrocellulose membrane (C), the part (D) containing silver and/or gold nanoparticles covalently bound to the nitrocellulose membrane,
the nitrocellulose membrane (C), and the absorption part (E) are attached to the substrate (B), and wherein
the individual parts are attached to the substrate so as to fit closely and to allow free movement of a liquid from its application to the sample part (A) through the nitrocellulose membrane (C), the part (D) containing silver and/or gold nanoparticles, and the nitrocellulose membrane (C) to the sample absorption in the absorption part (E);
preferably, the individual parts are attached to the substrate with a glue.

8. The method according to claim 7, **wherein** the part (D) of the nitrocellulose membrane, containing silver nanoparticles, is prepared by reaction of silver nanoparticles and the nitrocellulose membrane with NaBH₄ in the absence of light.

9. The method according to claim 7, **wherein** the part (D) of the nitrocellulose membrane, containing gold nanoparticles, is prepared by reaction of gold nanoparticles and the nitrocellulose membrane with trisodium citrate in the absence of light.

10. The method according to claim 7, **wherein** the part (D) of the nitrocellulose membrane, containing silver and/or gold nanoparticles, is prepared by a method comprising the following steps:
a) first, an antibody is immobilized onto the nitrocellulose membrane by incubating the nitrocellulose membrane in the solution of the antibody, and after immobilization of the antibody to the nitrocellulose membrane, the latter is dried;
b1) the nitrocellulose membrane with the immobilized antibody prepared in step a) is reduced using NaBH₄ in the presence of silver nanoparticles in the solution of this antibody in the absence of light, thereby forming silver nanoparticles covalently bound to the nitrocellulose membrane with the immobilized antibody;
or
b2) the nitrocellulose membrane with the immobilized antibody prepared in step a) is reduced using trisodium citrate in the presence of gold nanoparticles in the solution of this antibody in the absence of light, thereby forming gold nanoparticles covalently bound to the nitrocellulose membrane with the immobilized antibody;
preferably, the antibody is a monoclonal antibody anti-IgG, anti-IgA or anti-IgM.

11. A method of direct detection of an analyte by surface-enhanced Raman spectroscopy, using the test strip according to any one of the claims 1 to 6, the method comprising the following steps:
(i) providing the test strip according to any one of the claims 1 to 6;
(ii) providing a sample of the analyte to be detected;
(iii) applying the analyte sample to the sample part (A) of the test strip and then passing the sample through the test strip from the sample part (A) to the absorption part (E);
(iv) measuring the surface-enhanced Raman spectrum of the analyte immobilised on the covalently bound silver and/or gold nanoparticles in the part (D) of the test strip containing silver and/or gold nanoparticles.

12. Use of the test strip according to any one of the claims 1 to 6 for the separation and detection of substances by surface-enhanced Raman spectroscopy.

## Patentansprüche

1. Ein Teststreifen für oberflächenverstärkte Raman-Spektroskopie, umfassend ein Substrat (B), an dem eine Nitrocellulosemembran (C) angebracht ist, wobei an einem Ende der Nitrocellulosemembran (C) ein Probenteil (A) zum Aufbringen der zu analysierenden Probe angebracht ist und am gegenüberliegenden Ende der Nitrocellulosemembran (C) ein Absorptionsteil (E) zum Absorbieren der durch den Teststreifen geleiteten Probe angebracht ist, wobei der Teststreifen weiter einen Teil (D) umfasst, der Silber- und/oder Goldnanopartikel enthält, wobei sich der Probenteil (A) und der Absorptionsteil (E) an gegenüberliegenden Enden des Teststreifens befinden und so angepasst sind, dass sie Flüssigkeit von ihrer Aufbringung auf den Probenteil (A) durch die Nitrocellulosemembran (C), den Teil (D), der Silber- und/oder Goldnanopartikel enthält, und die Nitrocellulosemembran (C) frei übertragen können, bis die Probe im Absorptionsteil (E) absorbiert wird,
**dadurch gekennzeichnet, dass**
die Nitrocellulosemembran (C), der Probenteil (A) und der Teil (D), der Silber- und/oder Goldnanopartikel enthält, haben eine Porengröße im Bereich von 0,20 bis 0,45 µm, vorzugsweise 0,30 µm, und der Absorptionsteil (E) hat eine Porengröße im Bereich von 0,45 bis 0,50 µm;
und dass die Silber- und/oder Goldnanopartikel über in der Nitrocellulosemembran vorhandene stickstoffhaltige funktionelle Gruppen kovalent an die Nitrocellulosemembran (C) gebunden sind und der Teil (D) in der Mitte des Teststreifens eingefügt ist.

2. Der Teststreifen nach Anspruch 1, wobei der Probenteil (A) außerdem mit einer nicht benetzenden Oberfläche mit einem Kontaktwinkel von mindestens 30 ° und mit einem Totvolumen > 50 µL/cm² versehen ist.

3. Der Teststreifen nach Anspruch 1 oder 2, wobei das Substrat (B) eine Kunststoff- oder Glasplatte ist, vorzugsweise mit einer Dicke im Bereich von 0,3 bis 5 mm, bevorzugter ist das Substrat (B) aus Kunststoff, noch bevorzugter ist der Kunststoff ausgewählt aus der Gruppe umfassend Polyvinylchlorid, Polypropylen und Polyethylen.

4. Der Teststreifen nach einem der vorhergehenden Ansprüche, wobei die Nitrocellulosemembran (C) und der Probenteil (A), der Absorptionsteil (E) und der Teil (D), der Silber- und/oder Goldnanopartikel enthält, mit einem doppelseitigen Klebeband oder einem Klebstoff an dem Substrat (B) befestigt sind.

5. Der Teststreifen nach einem der vorhergehenden Ansprüche, wobei die Oberfläche der Silber- und/oder Goldnanopartikel mit einem Antikörper funktionalisiert ist, bevorzugt mit einem Anti-IgG-, Anti-IgA- oder Anti-IgM-Antikörper.

6. Der Teststreifen nach Anspruch 5, wobei der Antikörper durch eine elektrostatische Wirkung an die Oberfläche von Silber- und/oder Goldnanopartikeln gebunden ist.

7. Verfahren zur Herstellung des Teststreifens nach einem der vorhergehenden Ansprüche, wobei der Probenteil (A), die Nitrocellulosemembran (C), der Teil (D), der Silber- und/oder Goldnanopartikel enthält, die kovalent an die Nitrocellulosemembran gebunden sind, die Nitrocellulosemembran (C) und der Absorptionsteil (E) an dem Substrat (B) befestigt sind,
und wobei
die einzelnen Teile so an dem Substrat befestigt sind, dass sie eng aneinander passen und eine freie Bewegung einer Flüssigkeit von ihrer Auftragung auf dem Probenteil (A) durch die Nitrocellulosemembran (C), den Teil (D), der Silber- und/oder Goldnanopartikel enthält, und die Nitrocellulosemembran (C) zur Probenabsorption im Absorptionsteil (E) ermöglichen;
vorzugsweise werden die einzelnen Teile mit einem Klebstoff an dem Substrat befestigt.

8. Verfahren nach Anspruch 7, wobei der Teil (D) der Nitrocellulosemembran, der Silbernanopartikel enthält, durch Reaktion von Silbernanopartikeln und der Nitrocellulosemembran mit NaBH₄ in Abwesenheit von Licht hergestellt wird.

9. Verfahren nach Anspruch 7, wobei der Teil (D) der Nitrocellulosemembran, der Goldnanopartikel enthält, durch Reaktion von Goldnanopartikeln und der Nitrocellulosemembran mit Trinatriumcitrat in Abwesenheit von Licht hergestellt wird.

10. Verfahren nach Anspruch 7, wobei der Teil (D) der Nitrocellulosemembran, der Silber- und/oder Goldnanopartikel enthält, durch ein Verfahren hergestellt wird, das die folgenden Schritte umfasst:
a) Zuerst wird ein Antikörper auf der Nitrocellulosemembran immobilisiert, durch Inkubierung von der Nitrocellulosemembran in der Lösung des Antikörpers, und nach der Immobilisierung des Antikörpers auf der Nitrocellulosemembran wird die Nitrocellulosemembran getrocknet;
b1) die Nitrocellulosemembran mit dem in Schritt a) hergestellten immobilisierten Antikörper wird in Gegenwart von Silbernanopartikeln in der Lösung dieses Antikörpers unter Lichtausschluss mit NaBH₄ reduziert, wodurch Silbernanopartikel gebildet werden, die mit dem immobilisierten Antikörper kovalent an die Nitrocellulosemembran gebunden sind;
oder
b2) die Nitrocellulosemembran mit dem in Schritt a) hergestellten immobilisierten Antikörper wird in Gegenwart von Goldnanopartikeln in der Lösung dieses Antikörpers unter Lichtausschluss mit Trinatriumcitrat reduziert, wodurch Goldnanopartikel gebildet werden, die mit dem immobilisierten Antikörper kovalent an die Nitrocellulosemembran gebunden sind;
vorzugsweise ist der Antikörper ein monoklonaler Antikörper Anti-IgG, Anti-IgA oder Anti-IgM.

11. Verfahren zum direkten Nachweis eines Analyten durch oberflächenverstärkte Raman-Spektroskopie unter Verwendung des Teststreifens nach einem der Ansprüche 1 bis 6, wobei das Verfahren die folgenden Schritte umfasst:
(i) Bereitstellen des Teststreifens nach einem der Ansprüche 1 bis 6;
(ii) Bereitstellen einer Probe des zu detektierendes Analyten;
(iii) Aufbringen der Analytprobe auf den Probenteil (A) des Teststreifens und anschließendes Durchleiten der Probe durch den Teststreifen vom Probenteil (A) zum Absorptionsteil (E);
(iv) Messen des oberflächenverstärkten Raman-Spektrums des Analyten, der auf den kovalent gebundenen Silber- und/oder Goldnanopartikeln immobilisiert ist, in dem Teil (D) des Teststreifens, der Silber- und/oder Goldnanopartikel enthält.

12. Verwendung des Teststreifens nach einem der Ansprüche 1 bis 6 zur Trennung und Detektion von Substanzen mittels oberflächenverstärkter Raman-Spektroskopie.

## Revendications

1. Une bandelette de test pour spectroscopie Raman exaltée de surface, comprenant un substrat (B) auquel est fixée une membrane de nitrocellulose (C), dans laquelle à une extrémité de la membrane de nitrocellulose (C) est fixée une partie d'échantillon (A) pour l'application de l'échantillon à analyser, et à l'extrémité opposée de la membrane de nitrocellulose (C) une partie d'absorption (E) est fixée pour absorber l'échantillon passé à travers la bandelette de test, la bandelette de test comprenant en outre une partie (D) contenant des nanoparticules d'argent et/ou d'or,
dans laquelle la partie d'échantillon (A) et la partie d'absorption (E) sont situées aux extrémités opposées de la bandelette de test, et sont adaptées pour transférer librement le liquide de son application sur la partie d'échantillon (A) à travers la membrane de nitrocellulose (C), la partie (D) contenant des nanoparticules d'argent et/ou d'or, et la membrane de nitrocellulose (C) jusqu'à l'absorption de l'échantillon dans la partie d'absorption (E),
**caractérisée en ce que**
la membrane de nitrocellulose (C), la partie d'échantillon (A) et la partie (D) contenant des nanoparticules d'argent et/ou d'or ont leur taille de pores dans la gamme de 0,20 à 0,45 µm, de préférence 0,30 µm, et la partie d'absorption (E) a une taille de pores dans la gamme de 0,45 à 0,50 µm ;
et **en ce que** les nanoparticules d'argent et/ou d'or sont liées de manière covalente à la membrane de nitrocellulose (C) par l'intermédiaire de groupes fonctionnels contenant de l'azote présents dans la membrane de nitrocellulose, et la partie (D) est insérée au milieu de la bandelette de test.

2. La bandelette de test selon la revendication 1, dans laquelle la partie d'échantillon (A) est en outre dotée d'une surface non mouillante avec un angle de contact d'au moins 30°, et avec un volume de rétention > 50 µL/cm².

3. La bandelette de test selon la revendication 1 ou 2, dans laquelle le substrat (B) est une feuille de plastique ou de verre, de préférence d'une épaisseur dans la gamme de 0,3 à 5 mm, plus préférablement le substrat (B) est en plastique, encore plus préférablement le plastique est choisi dans le groupe comprenant le chlorure de polyvinyle, le polypropylène et le polyéthylène.

4. La bandelette de test selon l'une quelconque des revendications précédentes, dans laquelle la membrane de nitrocellulose (C) et la partie échantillon (A), la partie absorption (E) et la partie (D) contenant des nanoparticules d'argent et/ou d'or sont fixées au substrat (B) avec un ruban adhésif double face ou avec une colle.

5. La bandelette de test selon l'une quelconque des revendications précédentes, dans laquelle la surface des nanoparticules d'argent et/ou d'or est fonctionnalisée avec un anticorps, de préférence avec un anticorps anti-IgG, anti-IgA ou anti-IgM.

6. La bandelette de test selon la revendication 5, dans laquelle l'anticorps est lié à la surface de nanoparticules d'argent et/ou d'or par une interaction électrostatique.

7. Un procédé de préparation de la bandelette de test selon l'une quelconque des revendications précédentes, dans lequel la partie échantillon (A), la membrane de nitrocellulose (C), la partie (D) contenant des nanoparticules d'argent et/ou d'or liées de manière covalente à la membrane de nitrocellulose, la membrane de nitrocellulose (C) et la partie d'absorption (E) sont fixées au substrat (B),
et dans lequel
les parties individuelles sont fixées au substrat de manière à s'ajuster étroitement et à permettre le mouvement libre d'un liquide depuis son application sur la partie échantillon (A) à travers la membrane de nitrocellulose (C), la partie (D) contenant des nanoparticules d'argent et/ou d'or et la membrane de nitrocellulose (C) jusqu'à l'absorption de l'échantillon dans la partie d'absorption (E); de préférence, les parties individuelles sont fixées au substrat avec une colle.

8. Le procédé selon la revendication 7, dans lequel la partie (D) de la membrane de nitrocellulose, contenant des nanoparticules d'argent, est préparée par réaction de nanoparticules d'argent et de la membrane de nitrocellulose avec du NaBH₄ en l'absence de lumière.

9. Le procédé selon la revendication 7, dans lequel la partie (D) de la membrane de nitrocellulose, contenant des nanoparticules d'or, est préparée par réaction de nanoparticules d'or et de la membrane de nitrocellulose avec du citrate trisodique en l'absence de lumière.

10. Le procédé selon la revendication 7, dans lequel la partie (D) de la membrane de nitrocellulose, contenant des nanoparticules d'argent et/ou d'or, est préparée par un procédé comprenant les étapes suivantes :
a) tout d'abord, un anticorps est immobilisé sur la membrane de nitrocellulose par incubation de la membrane de nitrocellulose dans la solution de l'anticorps, et après immobilisation de l'anticorps sur la membrane de nitrocellulose, cette dernière est séchée ;
b1) la membrane de nitrocellulose avec l'anticorps immobilisé préparée à l'étape a) est réduite à l'aide de NaBH₄ en présence de nanoparticules d'argent dans la solution de cet anticorps en l'absence de lumière, formant ainsi des nanoparticules d'argent liées de manière covalente à la membrane de nitrocellulose avec l'anticorps immobilisé ;
ou
b2) la membrane de nitrocellulose avec l'anticorps immobilisé préparée à l'étape a) est réduite à l'aide de citrate trisodique en présence de nanoparticules d'or dans la solution de cet anticorps en l'absence de lumière, formant ainsi des nanoparticules d'or liées de manière covalente à la membrane de nitrocellulose avec l'anticorps immobilisé ;
de préférence, l'anticorps est un anticorps monoclonal anti-IgG, anti-IgA ou anti-IgM.

11. Un procédé de détection directe d'un analyte par spectroscopie Raman exaltée de surface, utilisant la bandelette de test selon l'une quelconque des revendications 1 à 6, le procédé comprenant les étapes suivantes :
(i) fourniture de la bandelette de test selon l'une quelconque des revendications 1 à 6 ;
(ii) fourniture d'un échantillon de l'analyte à détecter ;
(iii) application de l'échantillon d'analyte sur la partie échantillon (A) de la bandelette de test puis passage de l'échantillon à travers la bandelette de test de la partie échantillon (A) à la partie absorption (E) ;
(iv) mesure du spectre Raman exaltée de surface de l'analyte immobilisé sur les nanoparticules d'argent et/ou d'or liées de manière covalente dans la partie (D) de la bandelette de test contenant des nanoparticules d'argent et/ou d'or.

12. Utilisation de la bandelette de test selon l'une quelconque des revendications 1 à 6 pour la séparation et la détection de substances par spectroscopie Raman exaltée de surface.
